# EUROPEAN PATENT SPECIFICATION

(11) **EP 4 218 512 B1**
(45) Date of publication and mention of the grant of the patent: **14.08.2024**
(21) Application number: 23151857.2
(22) Date of filing: 16.01.2023
(51) Int. Cl.: A47J 42/06, A47J 42/08, A47J 42/50

(54) **GRINDER**
MAHLMÜHLE
MOULIN

(30) Priority: 27.01.2022 CN 202220228557 U
(43) Date of publication of application: 02.08.2023
(73) Proprietor: Ningbo Chefshere Kitchen Technology Co., Ltd., Ningbo, Zhejiang 315000 (CN)
(72) Inventor: Zhang, Chao, Ningbo, Zhejiang 315000 (CN)
(74) Representative: karo IP

(56) References cited:
- WO-A2-2012/120363
- KR-B1- 101 968 520
- US-A1- 2010 308 141
- US-B2- 8 960 580

## Description

### TECHNICAL FIELD

The present disclosure relates to the field of grinding technology, in particular to a (small) grinder.

### BACKGROUND

With the development of science and technology, people's living standards have also been greatly improved. A variety of household appliances have filled our kitchen. In addition to traditional pots and pans, there are also dishwashers, high speed blender, grinders, ovens and other functional appliances.

Grinders are important equipment for the preparation of powder particles. Grinding has a long history, which can be traced back to thousands of years ago. Early grinding technologies are mainly applied in the field of machinery manufacturing. In the 1730s, in order to adapt to the processing after the hardening of parts such as clocks, bicycles, sewing machines and guns, grinders using natural abrasive grinding wheels have been developed in the United Kingdom, Germany and the United States, respectively. Grinding is a unit operation for converting a solid substance into smaller particles. Grinding can increase the surface area of an object substance, manufacture particles of a required size, grind the substance into a slurry, and improve the surface finish of the substance to meet the requirements of production and application. In today's society, grinding technology can be applied in various fields such as industry, machinery, chemistry, and kitchen.

"Food is the most important thing for people, and taste is the first thing to eat" shows the status of condiments in people's life. Condiments refer to auxiliary foods that can increase the color, fragrance and taste of dishes, promote appetite and are beneficial to human health. Its main function is to improve the quality of dishes, meet the sensory needs of consumers, stimulate appetite, and improve human health. Compared with granular or blocky condiments, powdered condiments are more convenient to use and have a stronger taste. However, most condiments used in daily life have an original bulk or granular structure, such as salt and pepper. However, not all condiments are suitable for grinding in advance to powder for sale. In many cases, they need to be ground and used immediately, such as sesame, white pepper, Chinese prickly ash and cumin. After the above condiments are changed from block or granule to powder, their contact area with the air is greatly increased, leading to water absorption and deliquescence. The effective ingredients therein may also be decomposed by the fungi in the air; in addition, the release of the flavor is accelerated. Therefore, a household kitchen grinder came into being.

The patent of application no. 202111167893.5 provides a manual-electric integrated universal powder grinding cylinder and a working method therefor. The cylinder comprises an upper cover assembly, a lower cover assembly and a grinding head assembly, wherein the upper cover assembly comprises a transmission structure and an upper cover, a transmission structure is arranged in the upper cover, an elastic member is connected between the transmission structure and the upper cover, a lower end of the transmission structure is inserted into the lower cover assembly, the lower cover assembly is connected to the upper cover, and the lower end of the lower cover assembly is connected to the grinding head assembly. By implementing the cylinder of the embodiments of the present application, an automatic powder grinder can be formed in cooperation with the power assembly. No matter whether the grinding is performed manually or in an automatic grinding process, there is no need to manually press the upper cover assembly of the cylinder, which is convenient to use. However, the powder grinding cylinder has a complex structure and a large volume, and inconvenience in carry.

US 8 960 580 B2 discloses an electric grinder comprising a housing, a grinding head assembly, a seat, an upper base, a grinding base, a motor placed inside the seat having a top, a transmitting device, a guiding plate, and a sweeping wheel. The housing is composed of a lower sleeve and an upper sleeve, the upper sleeve being mounted on top of the lower sleeve. The grinding head assembly is mounted in the housing for grinding condiments. The seat is placed inside the lower sleeve. The upper base is connected to the top the seat. The grinding base is mounted on the top of the seat. The transmitting device is connected to the motor. The grinding head assembly is mounted inside the grinding base, and the grinding head assembly is driven by the motor to grind the condiments. The guiding plate is connected to the seat for guiding the condiments. And the sweeping wheel is rotatably mounted above the upper base for maintaining flow of the condiments through the grinding head assembly. In the invention, as the guiding plate and the sweeping wheel are provided, respectively, taint of odor and condiment blockage can be avoided during grinding of different condiments. With that arrangement, the charging opening of the grinder assembly shall be effectively prevented from being blocked by condiments so as to ensure smooth charging and discharging. However, said grinder has a complex structure and a large volume.

US 2010/308141 A1 discloses a grinding system comprising a grinding mill including a housing and a grinding mechanism which is mounted in said housing and which is adapted to grind particles of a material, a reload cartridge adapted to be removably coupled to said grinding mill, said cartridge defining an internal volume which is adapted to contain said material to be ground, said cartridge having at least one closure member which is adapted to close said internal volume before said cartridge is coupled to said grinding mill and to open toward said grinding mechanism when said cartridge is coupled to said grinding mill. The grinding system shall ensure that closure member of the cartridge automatically opens when coupling the cartridge to the grinding mill. Thus, the grinding mill includes an opening member which is adapted to open said closure member when said cartridge is coupled to the grinding mill. However, said grinder has a complex structure and a large volume.

### SUMMARY

In view of the problems of complex structure, large volume and inconvenience in carrying of the grinder in the prior art, the present disclosure shall provide a small grinder which is easy to carry, and has a simple structure, convenient operation and a good grinding effect.

These objects are solved with a grinder according to the features of claim 1.

The technical solution adopted by the disclosure to solve the above technical problems is: a grinder, comprising a housing; a fixing plate and a bracket are provided inside the housing, the fixing plate divides an inner portion of the housing into an upper portion and a lower portion, and a feeding assembly is provided on the upper portion of the housing; a bracket is further provided on the upper portion of the housing; the bracket divides the upper portion of the housing into two parts which are respectively provided with a power mechanism and a power supply mechanism; the feeding assembly, the power mechanism and the power supply mechanism are transversely arranged; the power mechanism is used for providing a driving force for the grinder, the power supply mechanism is used for providing power for the power mechanism, and the feeding assembly is used for adding and containing materials.

The grinder comprises a grinding mechanism; the grinding mechanism is provided on the lower portion of the housing, the grinding mechanism comprises a male grinding head and a female grinding head, and the male grinding head is rotatably fitted in the female grinding head.

Further, the power mechanism comprises a motor and a driving shaft, wherein one end of the driving shaft is connected to an output shaft of the motor, and the other end of the driving shaft is connected to the male grinding head.

Further, a shifting mechanism is provided below the male grinding head, and the shifting mechanism is rotatably connected to the male grinding head.

Further, the shifting mechanism is connected below the male grinding head, the shifting mechanism is rotatably connected to the male grinding head, a compression spring is provided inside the shifting mechanism, and the position of the male grinding head is adjusted by rotating the shifting mechanism to adjust the compression degree of the compression spring, thereby adjusting the thickness of grinding.

Furthermore, the feeding assembly is detachably connected or adsorptively connected to the power supply mechanism or the power mechanism. The detachable connection can be threaded connection and snap connection, and the absorptive connection can be magnetic adsorption connection. The fixed connection is greatly affected by an external environment, and may deform in long-term use. The detachable connection or the absorptive connection has the advantages of a simple structure, reliable connection, and convenient assembly and disassembly. The feeding assembly of the grinder is configured to be detachable connection or absorptive connection, which is also more convenient to clean and carry.

Further, the feeding assembly is provided with a first limiting mechanism. The first limiting mechanism is used for limiting the feeding assembly in the transverse direction, preventing the feeding assembly from moving relative to other parts of the housing in the transverse direction during carrying, and further fixing and limiting the feeding assembly.

Further, the housing is further provided with a switch button, the switch button is provided on the top of the housing, the top of the housing is provided with an arc or inclined surface from top to bottom, and the switch button is provided at a lower middle portion of the arc or inclined surface. Such an arrangement conforms to ergonomics, and the switch button can be easily accessed during use.

Further, the female grinding head comprises a coarse grinding portion and a fine grinding portion, the coarse grinding portion is provided above the fine grinding portion, first grinding teeth having a plurality of helical tooth lines are provided on an inner circumferential wall of the coarse grinding portion, and second grinding teeth having a plurality of helical tooth lines are provided on an inner circumferential wall of the fine grinding portion, and the number of the second grinding teeth is greater than that of the first grinding teeth, and third grinding teeth having a plurality of helical tooth lines are provided on an outer circumferential wall of the male grinding head.

The grinding mechanism further comprises a fixed seat, the fixed seat is used for fixing and limiting the female grinding head, the fixed seat is provided with a guide mechanism, a first protrusion or a first groove is provided on an inner circumferential wall of the fixed seat, and a second groove cooperating with the first protrusion or a second protrusion cooperating with the first groove is provided on an outer circumferential wall of the female grinding head.

In some embodiments, the housing is further provided with a fixed bottom seat and a bottom plate, a working hole is provided in the fixed bottom seat, the fixed bottom seat is embedded on the fixed seat through the working hole, and the fixed bottom seat encloses each component in the housing inside the housing, preventing dust from entering the housing when the shifting mechanism is used, and making the grinder overall more attractive and precise. The bottom plate is located at the bottom of the small grinder.

Further, the fixed bottom seat is further provided with a second limiting mechanism, the second limiting mechanism is a circular protrusion, and the circular protrusion is just embedded at the bottom of the fixed seat, so that the fixed bottom seat is better connected to the fixed seat, and the whole structure has better stability.

Compared with existing products, the present disclosure has the following advantages:
(1) the power mechanism, the power supply mechanism, and the feeding assembly provided in the small grinder are transversely arranged, having a reasonable layout, a simple structure, a small volume, and is convenient to carry;
(2) the fixing plate provided in the small grinder divides the inner portion of the housing into an upper portion and a lower portion, facilitating disassembly and maintenance; and
(3) the switch button provided in the small grinder is provided on the top of the housing, so that the switch button can be easily accessed during use, and the opening and closing can be controlled at any time.

### BRIEF DESCRIPTION OF THE DRAWINGS

The present application will be described in further detail below with reference to the drawings and preferred embodiments, but it will be appreciated by a person skilled in the art that the drawings are drawn for purposes of illustration of the preferred embodiments only, and thus should not be taken as limiting the scope of the present application, said scope being defined by the appended claims. Furthermore, unless specifically indicated otherwise, the drawings are merely meant to conceptually represent compositions or configurations of the described objects and may contain exaggerated representations, and the drawings are not necessarily drawn to scale.
FIG. 1 is a first schematic view of a structure of a grinder of the present disclosure;
FIG. 2 is a second schematic view of a structure of a grinder of the present disclosure;
FIG. 3 is a third schematic view of a structure of a grinder of the present disclosure;
FIG. 4 is a schematic view of a structure of a male grinding head of the present disclosure;
FIG. 5 is a schematic view of a structure of a female grinding head of the present disclosure;
FIG. 6 is a schematic view of a structure of a fixed seat of the present disclosure;
FIG. 7 is a fourth schematic view of a structure of a grinder of the present disclosure;
FIG. 8 is a fifth schematic view of a structure of a small grinder of the present disclosure; and
FIG. 9 is a sectional view of a grinder of the present disclosure.

### Description of reference numerals:

1: switch button; 2: charging port; 3: housing; 4: first limiting mechanism; 5: first magnet; 6: fixed seat; 7: second magnet; 71: connection seat; 61: guide mechanism; 62: second groove; 8: male grinding head; 81: third grinding tooth; 9: female grinding head; 91: first protrusion; 92. first grinding tooth; 93. second grinding tooth; 10. bracket; 11. fixing plate; 12. fixed bottom seat; 13. feeding assembly; 14. working hole;15: bottom plate; 16: motor; 17: battery; 18: shifting mechanism; 19: second limiting mechanism; 20: insertion member.

### DETAILED DESCRIPTION OF THE EMBODIMENTS

In order to enable a person skilled in the art to better understand the technical solutions of the present disclosure, the present disclosure will be described in detail and clearly with reference to the drawings and embodiments. It should be understood that the specific embodiments described herein are only intended to explain the present disclosure, but not to limit the present disclosure, the scope of the present invention being defined by the appended claims.

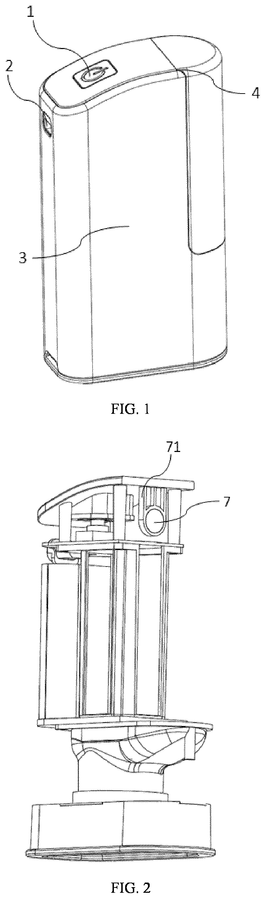

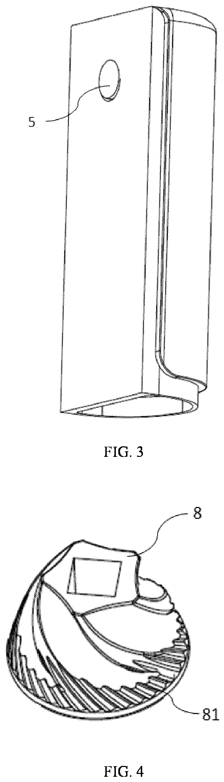

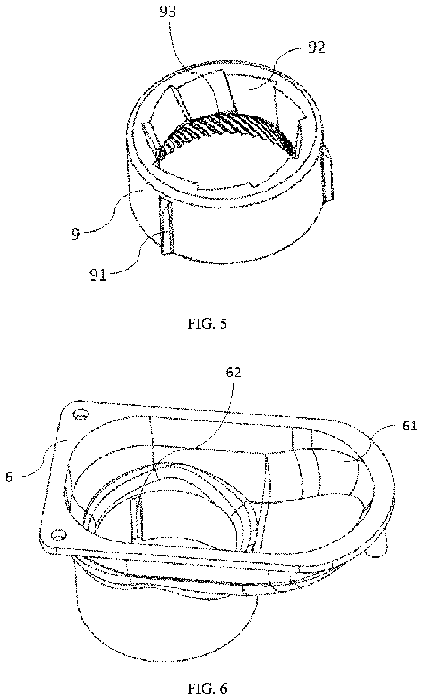

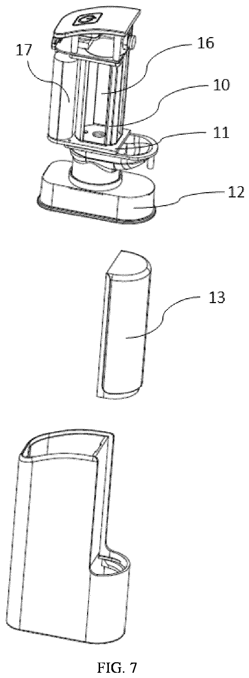

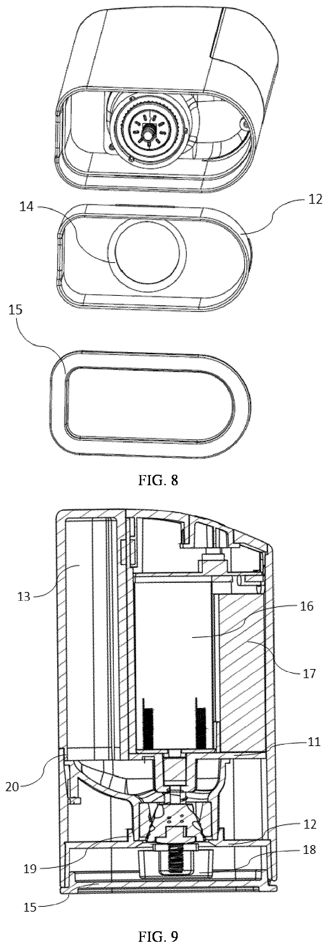

One embodiment of the present disclosure discloses a small grinder, as shown in FIGs. 1-9.

A grinder provided by the present disclosure comprises a housing 3. A fixing plate 11 is provided inside the housing 3. The fixing plate 11 divides an inner portion of the housing 3 into an upper portion and a lower portion, which is convenient for disassembly and maintenance. A feeding assembly 13 is provided on the upper portion of the housing 3; a bracket 10 is further provided on the upper portion of the housing 3; the bracket 10 divides the upper portion of the housing 3 into two parts which are respectively provided with a power mechanism and a power supply mechanism; and the feeding assembly, the power mechanism and the power supply mechanism are transversely arranged. For a traditional grinder, a power mechanism, a power supply mechanism and a feeding assembly are usually longitudinally arranged, which occupies a large volume, and the arrangement of the transverse arrangement makes the arrangement more compact.

The power mechanism comprises a motor 16 and a driving shaft, the driving shaft is connected to an output shaft of the motor 16, and the power supply mechanism is a battery 17, preferably, the battery 17 is a rechargeable battery. The rechargeable battery is economical, environmentally friendly, durable, and requires no regular replacement, and is suitable for electric appliances with high power and long-term use.

The feeding assembly 13 is adsorptively connected to the power mechanism, which facilitates taking of materials. A first baffle plate is provided on a side of the feeding assembly 13 close to the power mechanism, a second baffle plate is provided on a side edge of the power mechanism close to the feeding assembly 13, a first hole is provided above the first baffle plate, a first magnet 5 is embedded in the first hole, the first magnet 5 is located at one side of the second baffle plate, and a second magnet 7 is provided on the other side of the second baffle plate at a position corresponding to the first magnet 5. The small grinder comprises an upper end cover, the upper end cover is provided with a connection seat 71, a second hole is provided on one end of the connection seat 71 away from the upper end cover, the second hole faces towards the second baffle plate, the second baffle plate just blocks the second hole, and the second magnet 7 is embedded in the second hole, such that this arrangement enables the second magnet 7 to be better fixed to avoid being knocked or shaken off during carrying.

A charging port 2 is arranged on a side of the housing, and the charging port 2 is close to the battery 17 and is used for charging the battery 17.

In some embodiments, the rechargeable battery is a lithium-ion battery, and the lithium-ion battery is a secondary battery which mainly relies on lithium ions to move between a positive electrode and a negative electrode to work. During charging and discharging, lithium ions are inserted and extracted back and forth between two electrodes; during charging, the lithium ions are extracted from a positive electrode, and are inserted into a negative electrode via an electrolyte; and the negative electrode is in a lithium-rich state, and when discharging is performed oppositely. A lithium-ion battery has a high voltage, a large specific energy, a long cycle life, a small self-discharge, a long cycle life, and good safety performance, and can be charged quickly.

In another embodiment of the present disclosure, a switch button 1 is provided on the top of the housing 3, the top of the housing 3 is in an arc shape or an inclined surface from top to bottom, and the switch button 1 is provided in a lower middle portion of the arc shape or the inclined surface. Such an arrangement conforms to ergonomics, the switch button 1 can be easily accessed during use, and the opening and closing can be controlled at any time.

A first limiting mechanism 4 is provided at the connection between an upper end of the feeding assembly 13 and the power mechanism, and the first limiting mechanism 4 is used for limiting the feeding assembly 13 in the transverse direction, preventing the feeding assembly 13 from moving relative to other parts of the housing 3 in the transverse direction during carrying, and further fixing and limiting the feeding assembly 13.

An insertion member 20 is provided at the connection between a lower end of the feeding assembly 13 and the lower portion of the housing 3, the insertion member 20 is convex, and the feeding assembly 13 is connected to the lower portion of the housing 3 by means of an insertion member 20.

The grinder comprises a grinding mechanism, and the grinding mechanism comprises a male grinding head 8, a female grinding head 9 and a fixed seat 6; the male grinding head 8 is similar to a circular truncated cone shape, the female grinding head 9 is annular, the male grinding head 8 is rotatably fitted in the female grinding head 9, the fixed seat 6 is used for fixing and limiting the female grinding head 9, and the male grinding head 8 is connected to a motor 16 by means of a driving shaft. The female grinding head 9 comprises a coarse grinding portion and a fine grinding portion, the coarse grinding portion is provided above the fine grinding portion, first grinding teeth 92 having a plurality of helical tooth lines are provided on an inner circumferential wall of the coarse grinding portion, and second grinding teeth 93 having a plurality of helical tooth lines are provided on an inner circumferential wall of the fine grinding portion, and third grinding teeth 81 having a plurality of helical tooth lines are provided on an outer circumferential wall of the male grinding head 8. The fixed seat 6 is provided with a guide mechanism 61, and the guide mechanism 61 is a smooth inclined surface. Such a design facilitates the smooth falling of materials, and increases the grinding effect and grinding efficiency.

In some embodiments, the feeding assembly 13 further comprises a feeding mechanism, the feeding mechanism is used for preventing blocking of materials when entering the grinding mechanism, the feeding mechanism is a screw or a paddle, the paddle can be made of a rubber material, and the rubber material can be deformed, thereby achieving a better feeding effect.

The male grinding head 8 forms a plurality of material discharging ports on one end of the female grinding head 9 after being rotatably fitted with the female grinding head 9, and the size of one side of each of the material discharging ports is greater than the size of the other side of each of the material discharging ports. The third grinding teeth 81 extend from the upper end of the male grinding head 8 to the lower end of the male grinding head 8. Such an arrangement enables the male grinding head 8 to have better pressing and guidance effects on the material entering the grinding gap, and is easier to press the material into the grinding gap and to discharge the ground material in the grinding gap, thereby having better usage effects.

A first protrusion 91 is provided on an outer circumferential wall of the female grinding head 9, the fixed seat 6 is provided with a second groove 62, and the first protrusion 91 is embedded in the second groove 62.

A shifting mechanism 18 is connected below the male grinding head 8, the shifting mechanism 18 is rotatably connected to the male grinding head 8, a compression spring is provided inside the shifting mechanism 18, and the position of the male grinding head 8 is adjusted by rotating the shifting mechanism 18 to adjust the compression degree of the compression spring, thereby adjusting the thickness of grinding.

The housing 3 is further provided with a fixed bottom seat 12 and a bottom plate 15. The fixed bottom seat 12 is provided with a working hole 14. The fixed bottom seat 12 is embedded on the fixed seat 6 through the working hole 14. Parts inside the housing are well sealed. When the shifting mechanism 18 is used, there is no need to worry about dust entering the housing 3, which also makes the whole apparatus more aesthetically pleasing and delicate. The bottom plate 15 is located at the bottom of the small grinder and is used for separating the interior of the housing 3 from an external environment to prevent external contaminants from entering the housing 3.

The fixed bottom seat 12 is further provided with a second limiting mechanism 19, the second limiting mechanism 19 is a circular protrusion, and the circular protrusion is just embedded at the bottom of the fixed seat 6, so that the fixed bottom seat 12 is better connected to the fixed seat 6, thereby avoiding materials from leaking therefrom, and preventing external impurities and bacteria from entering, so that the whole structure has better stability and reliability.

In some embodiments, a sealing member is provided between the second limiting mechanism 19 and the fixed bottom seat 12, and the sealing member is used for better sealing between the fixed bottom seat 12 and the fixed seat 6.

In the present application, a power mechanism, a power supply mechanism and a feeding assembly 13 disclosed in the grinder, are transversely arranged, having a reasonable layout, a simple structure and a small volume; the fixing plate 11 provided in the grinder divides the internal portion of the housing 3 into an upper portion and a lower portion, facilitating disassembly and maintenance; and the switch button 1 provided in the grinder is located on the top of the housing 3, so that the switch button 1 can be easily accessed during use, and the opening and closing can be controlled at any time.

The present application has been described in detail above, and specific examples are used herein to illustrate the principle and implementation of the present application. The description of the above embodiments is only used to help understand the present application and the core idea.

## Claims

1. A grinder, comprising a housing (3) with a longitudinal direction from an upper side to a lower side, wherein a fixing plate (11) is provided inside the housing (3), the fixing plate (11) divides an inner portion of the housing (3) into an upper portion and a lower portion, a feeding assembly (13) is provided on the upper portion of the housing (3); a bracket (10) is further provided on the upper portion of the housing; the bracket (10) divides the remaining upper portion - thereby excluding the volume of the upper portion comprised within the feeding assembly - of the housing (3) into two parts, and wherein one part is provided with a power mechanism and the other part is provided with a power supply mechanism; the feeding assembly (13), the power mechanism and the power supply mechanism are transversely arranged with respect to the longitudinal direction,
wherein a grinding mechanism is provided on the lower portion of the housing (3), the grinding mechanism comprises a male grinding head (8) and a female grinding head (9), the male grinding head (8) is rotatably fitted in the female grinding head (9), and the male grinding head (8) is connected to a motor (16) by means of a driving shaft,
wherein a shifting mechanism (18) is connected below the male grinding head (8), and the shifting mechanism (18) is rotatably connected to the male grinding head (8),
**characterized in that**
a compression spring is provided inside the shifting mechanism 18, and the position of the male grinding head 8 is adjusted by rotating the shifting mechanism 18 to adjust the compression degree of the compression spring, thereby adjusting the thickness of grinding.

2. The grinder of claim 1, wherein the feeding assembly (13) is adsorptively connected to the power mechanism, a first limiting mechanism (4) is provided at the connection between an upper end of the feeding assembly (13) and the power mechanism, the first limiting mechanism (4) is used for preventing the feeding assembly (13) from moving transversely, the power mechanism comprises a motor (16) and a driving shaft, the driving shaft is connected to an output shaft of the motor (16), and the power supply mechanism is a battery.

3. The grinder of claim 2, wherein an insertion member (20) is provided at the connection between a lower end of the feeding assembly (13) and the lower portion of the housing (3), the insertion member (20) is convex, and the feeding assembly (13) is connected to the lower portion of the housing (3) by means of an insertion member (20).

4. The grinder of claim 1, wherein the grinding mechanism further comprises a fixed seat (6), the fixed seat (6) is provided with a guide mechanism (61), the guide mechanism (61) is an inclined plane, the fixed seat (6) is used for fixing and limiting the female grinding head (9), a first protrusion (91) or a first groove is provided on an inner circumferential wall of the fixed seat (6), and a second groove (62) cooperating with the first protrusion (91) or a second protrusion cooperating with the first groove is provided on an outer circumferential wall of the female grinding head (9).

5. The grinder of claim 4, wherein a fixed bottom seat (12) and a bottom plate (15) are further provided in the housing (3), a working hole (14) is provided in the fixed bottom seat (12), the fixed bottom seat (12) is embedded on the fixed seat (6) through the working hole (14), and the bottom plate (15) is located at the bottom of the small grinder and is used for separating the interior of the housing (3) from an external environment.

6. The grinder of claim 5, wherein a second limiting mechanism (19) is provided on the fixed bottom seat (12), the second limiting mechanism (19) is a circular protrusion, and the circular protrusion is embedded at the bottom of the fixed seat (6).

7. The grinder of claim 1, wherein a switch button (1) is provided on the top of the housing (3), the top of the housing (3) is in an arc shape from top to bottom, and the switch button (1) is provided at a lower middle portion of the arc shape.

8. The grinder of claim 1, wherein a charging port (2) is provided on a side of the housing (3), and the charging port (2) is close to a power supply mechanism and is used for charging the power supply mechanism; and the feeding assembly (13) further comprises a feeding mechanism, and the feeding mechanism is a screw or a paddle.

## Patentansprüche

1. Eine Schleifmaschine, die ein Gehäuse (3) mit einer Längsrichtung von einer oberen Seite zu einer unteren Seite umfasst, wobei eine Befestigungsplatte (11) im Inneren des Gehäuses (3) vorgesehen ist, die Befestigungsplatte (11) einen inneren Abschnitt des Gehäuses (3) in einen oberen Abschnitt und einen unteren Abschnitt unterteilt, eine Zuführungsbaugruppe (13) an dem oberen Abschnitt des Gehäuses (3) vorgesehen ist; eine Halterung (10) ferner an dem oberen Abschnitt des Gehäuses vorgesehen ist; die Halterung (10) den verbleibenden oberen Abschnitt des Gehäuses (3) in zwei Teile unterteilt - wodurch das Volumen des oberen Abschnitts, das in der Zuführungsbaugruppe umfasst ist, ausgeschlossen wird -, und wobei ein Teil mit einem Antriebsmechanismus und der andere Teil mit einem Stromversorgungsmechanismus versehen ist; die Zuführungsbaugruppe (13), der Antriebsmechanismus und der Stromversorgungsmechanismus quer zur Längsrichtung angeordnet sind,
wobei ein Schleifmechanismus an dem unteren Abschnitt des Gehäuses (3) vorgesehen ist, der Schleifmechanismus einen männlichen Schleifkopf (8) und einen weiblichen Schleifkopf (9) umfasst, der männliche Schleifkopf (8) drehbar in den weiblichen Schleifkopf (9) eingepasst ist und der männliche Schleifkopf (8) mittels einer Antriebswelle mit einem Motor (16) verbunden ist,
wobei ein Verschiebemechanismus (18) unterhalb des männlichen Schleifkopfes (8) angeschlossen ist und der Verschiebemechanismus (18) drehbar mit dem männlichen Schleifkopf (8) verbunden ist,
**dadurch gekennzeichnet, dass**
eine Druckfeder im Inneren des Verschiebemechanismus (18) vorgesehen ist und die Position des männlichen Schleifkopfes (8) durch Drehen des Verschiebemechanismus (18) eingestellt wird, um den Kompressionsgrad der Druckfeder einzustellen, wodurch die Schleifdicke eingestellt wird.

2. Schleifmaschine nach Anspruch 1, wobei die Zuführungsbaugruppe (13) adsorptiv mit dem Antriebsmechanismus verbunden ist, ein erster Begrenzungsmechanismus (4) an der Verbindung zwischen einem oberen Ende der Zuführungsbaugruppe (13) und dem Antriebsmechanismus vorgesehen ist, der erste Begrenzungsmechanismus (4) verwendet wird, um zu verhindern, dass sich die Zuführungsbaugruppe (13) in Querrichtung bewegt, der Antriebsmechanismus einen Motor (16) und eine Antriebswelle umfasst, die Antriebswelle mit einer Ausgangswelle des Motors (16) verbunden ist und der Stromversorgungsmechanismus eine Batterie ist.

3. Schleifmaschine nach Anspruch 2, wobei ein Einführelement (20) an der Verbindung zwischen einem unteren Ende der Zuführungsbaugruppe (13) und dem unteren Abschnitt des Gehäuses (3) vorgesehen ist, das Einführelement (20) konvex ist und die Zuführungsbaugruppe (13) mittels eines Einführelements (20) mit dem unteren Abschnitt des Gehäuses (3) verbunden ist.

4. Schleifmaschine nach Anspruch 1, wobei der Schleifmechanismus ferner einen festen Sitz (6) umfasst, der feste Sitz (6) mit einem Führungsmechanismus (61) versehen ist, der Führungsmechanismus (61) eine schräge Ebene ist, der feste Sitz (6) zur Befestigung und Begrenzung des weiblichen Schleifkopfes (9) verwendet wird, ein erster Vorsprung (91) oder eine erste Nut an einer inneren Umfangswand des festen Sitzes (6) vorgesehen ist, und eine zweite Nut (62), die mit dem ersten Vorsprung (91) zusammenwirkt, oder ein zweiter Vorsprung, der mit der ersten Nut zusammenwirkt, an einer äußeren Umfangswand des weiblichen Schleifkopfes (9) vorgesehen ist.

5. Die Schleifmaschine nach Anspruch 4, wobei weiterhin ein fester Bodensitz (12) und eine Bodenplatte (15) in dem Gehäuse (3) vorgesehen sind, ein Arbeitsloch (14) in dem festen Bodensitz (12) vorgesehen ist, der feste Bodensitz (12) durch das Arbeitsloch (14) in den festen Sitz (6) eingebettet ist und die Bodenplatte (15) am Boden der kleinen Schleifmaschine angeordnet ist und dazu dient, das Innere des Gehäuses (3) von einer äußeren Umgebung abzutrennen.

6. Schleifmaschine nach Anspruch 5, bei der ein zweiter Begrenzungsmechanismus (19) an dem festen Bodensitz (12) vorgesehen ist, wobei der zweite Begrenzungsmechanismus (19) ein kreisförmiger Vorsprung ist und der kreisförmige Vorsprung an der Unterseite des festen Sitzes (6) eingebettet ist.

7. Schleifmaschine nach Anspruch 1, wobei ein Schaltknopf (1) an der Oberseite des Gehäuses (3) vorgesehen ist, die Oberseite des Gehäuses (3) von oben nach unten bogenförmig ist und der Schaltknopf (1) an einem unteren mittleren Abschnitt der Bogenform vorgesehen ist.

8. Schleifmaschine nach Anspruch 1, wobei ein Ladeanschluss (2) an einer Seite des Gehäuses (3) vorgesehen ist und der Ladeanschluss (2) sich in der Nähe eines Stromversorgungsmechanismus befindet und zum Aufladen des Stromversorgungsmechanismus verwendet wird; und die Zuführungsbaugruppe (13) ferner einen Zuführungsmechanismus umfasst, und der Zuführungsmechanismus eine Schraube oder ein Paddel ist.

## Revendications

1. Meuleuse, comprenant un boîtier (3) avec une direction longitudinale d'un côté supérieur à un côté inférieur, dans laquelle une plaque de fixation (11) est prévue à l'intérieur du boîtier (3), la plaque de fixation (11) divise une partie intérieure du boîtier (3) en une partie supérieure et une partie inférieure, un ensemble d'alimentation (13) est prévu sur la partie supérieure du boîtier (3) ; un support (10) est en outre prévu sur la partie supérieure du boîtier ; le support (10) divise la partie supérieure restante - excluant ainsi le volume de la partie supérieure comprise dans l'ensemble d'alimentation - du boîtier (3) en deux parties, et dans laquelle une partie est pourvue d'un mécanisme d'alimentation et l'autre partie est pourvue d'un mécanisme d'alimentation électrique ; l'ensemble d'alimentation (13), le mécanisme d'alimentation et le mécanisme d'alimentation électrique sont disposés transversalement par rapport à la direction longitudinale,
dans lequel un mécanisme de meulage est prévu sur la partie inférieure du boîtier (3), le mécanisme de meulage comprend une tête de meulage mâle (8) et une tête de meulage femelle (9), la tête de meulage mâle (8) est montée rotative dans la tête de meulage femelle (9), et la tête de meulage mâle (8) est reliée à un moteur (16) au moyen d'un arbre d'entraînement,
dans lequel un mécanisme de déplacement (18) est relié en dessous de la tête de meulage mâle (8), et le mécanisme de déplacement (18) est relié de manière rotative à la tête de meulage mâle (8),
**caractérisé en ce qu'**
un ressort de compression est prévu à l'intérieur du mécanisme de déplacement 18, et la position de la tête de meulage mâle 8 est réglé en faisant tourner le mécanisme de déplacement 18 pour régler le degré de compression du ressort de compression, réglant ainsi l'épaisseur de meulage.

2. Meuleuse selon la revendication 1, dans laquelle l'ensemble d'alimentation (13) est relié de manière adsorbante au mécanisme d'alimentation, un premier mécanisme de limitation (4) est prévu au niveau de la liaison entre une extrémité supérieure de l'ensemble d'alimentation (13) et le mécanisme d'alimentation, le premier mécanisme de limitation (4) est utilisé pour empêcher l'ensemble d'alimentation (13) de se déplacer transversalement, le mécanisme d'alimentation comprend un moteur (16) et un arbre d'entraînement, l'arbre d'entraînement est relié à un arbre de sortie du moteur (16), et le mécanisme d'alimentation électrique est une batterie.

3. Meuleuse selon la revendication 2, dans laquelle un élément d'insertion (20) est prévu au niveau de la liaison entre une extrémité inférieure de l'ensemble d'alimentation (13) et la partie inférieure du boîtier (3), l'élément d'insertion (20) est convexe, et l'ensemble d'alimentation (13) est relié à la partie inférieure du boîtier (3) au moyen d'un élément d'insertion (20).

4. Meuleuse selon la revendication 1, dans laquelle le mécanisme de meulage comprend en outre un siège fixe (6), le siège fixe (6) est pourvu d'un mécanisme de guidage (61), le mécanisme de guidage (61) est un plan incliné, le siège fixe (6) est utilisé pour fixer et limiter la tête de meulage femelle (9), une première saillie (91) ou une première rainure est prévue sur une paroi circonférentielle intérieure du siège fixe (6), et une seconde rainure (62) coopérant avec la première saillie (91) ou une seconde saillie coopérant avec la première rainure est prévue sur une paroi circonférentielle extérieure de la tête de meulage femelle (9).

5. Meuleuse selon la revendication 4, dans laquelle un siège inférieur fixe (12) et une plaque inférieure (15) sont en outre prévus dans le boîtier (3), un trou de travail (14) est prévu dans le siège inférieur fixe (12), le siège inférieur fixe (12) est encastré sur le siège fixe (6) à travers le trou de travail (14), et la plaque inférieure (15) est située au bas de la petite meuleuse et est utilisée pour séparer l'intérieur du boîtier (3) d'un environnement externe.

6. Meuleuse selon la revendication 5, dans laquelle un second mécanisme de limitation (19) est prévu sur le siège inférieur fixe (12), le second mécanisme de limitation (19) est une saillie circulaire, et la saillie circulaire est encastrée au fond du siège fixe (6).

7. Meuleuse selon la revendication 1, dans laquelle un bouton de commutation (1) est prévu sur le dessus du boîtier (3), le dessus du boîtier (3) est en forme d'arc de haut en bas, et le bouton de commutation (1) est prévu au niveau d'une partie médiane inférieure de la forme d'arc.

8. Meuleuse selon la revendication 1, dans laquelle un port de charge (2) est prévu sur un côté du boîtier (3), et le port de charge (2) est proche d'un mécanisme d'alimentation électrique et est utilisé pour charger le mécanisme d'alimentation électrique ; et l'ensemble d'alimentation (13) comprend en outre un mécanisme d'alimentation, et le mécanisme d'alimentation est une vis ou une palette.
